# NEUE EUROPÄISCHE PATENTSCHRIFT

(11) **EP 2 585 535 B2**
(45) Veröffentlichungstag und Bekanntmachung des Hinweises auf die Entscheidung über den Einspruch: **29.11.2023**
(45) Hinweis auf die Patenterteilung: 26.08.2015
(21) Anmeldenummer: 11743763.2
(22) Anmeldetag: 22.06.2011
(51) Int. Cl.: C09J 11/08, C09J 167/03, B65D 63/10, C08L 67/02

(54) **VERPACKUNGSELEMENT**
PACKAGING ELEMENT
ELÉMENT D'EMBALLAGE

(30) Priorität: 25.06.2010 AT 10832010
(43) Veröffentlichungstag der Anmeldung: 01.05.2013
(73) Patentinhaber: Teufelberger Gesellschaft m.b.H., 4600 Wels (AT)
(72) Erfinder: BRZEZOWSKY, Klaus, A-4614 Marchtrenk (AT); KRZIWANEK, Thomas, A-4600 Wels (AT)
(74) Vertreter: Burger, Hannes
(86) Internationale Anmeldenummer: PCT/AT2011/000280
(87) Internationale Veröffentlichungsnummer: WO 2011/160154

(56) Entgegenhaltungen:
- EP-A1- 0 894 829
- WO-A1-03/066704
- US-A- 4 130 686
- US-A1- 2005 238 897
- US-A1- 2008 071 009

## Beschreibung

Die Erfindung betrifft ein Verfahren zur Spleißhemmung eines bandförmigen Verpackungselementes, insbesondere ein Umreifungsbandes oder ein Erntebindegarns, aus einem Kunststoffband auf Polyesterbasis, wobei als Polyester ein PET eingesetzt wird, wobei das PET mit zumindest einem styrolbasierten Polymer als Spleißhemmer im Extrusionsverfahren compoundiert wird.

Umreifungsbänder werden üblicherweise aus Polyester oder Polyolefinen im Extrusionsverfahren mit anschließender Verstreckung hergestellt. Aufgrund der Ausrichtung der Moleküle beim Verstreckungsprozeß neigen sie daher zu Spleiß, d.h. zur Rißbildung in Bandrichtung. Durch die Versprödung von Kunststoffen bei niederen Temperaturen, insbesondere unter 5°C, wird die Spleißneigung noch verstärkt. Zur Verringerung der Spleißneigung werden den Compoundierungen zur Herstellung von Umreifungsbändern normalerweise Spleißhemmer zugesetzt. Die bisher verwendeten Spleißhemmer helfen aber nicht in ausreichendem Maße gegen die Versprödung bei niedrigen Temperaturen.

Aus der US 2005/238897 A1 ist ein Verpackungsband bekannt, das zu mehr als 92 Gew.-% aus einem Polyester und zu weniger als in Summe 8 Gew.-% aus einem Additiv auf Polyolefinbasis und weiteren Additiven besteht, wobei der Polyolefinadditivanteil weniger als 3 Gew.-% beträgt. Als weitere Additive werden untere anderem Elastomere auf Polystyrolbasis genannt in einem Anteil zwischen 0,5 Gew.-% und 2 Gew.-%. Durch den Polyolefinzusatz soll die longitudinale Spleißneigung reduziert werden. Ebenso sollen die Styrolelastomere zur Reduzierung dieser Spleißneigung beitragen.

Die Verwendung von Styrol-Butadien-Kautschuk in Anteilen von bis zu 25 Gew.-% in einem Polyethylenband ist auch aus der DE 20 37 398 A1 bekannt, wenngleich in diesem Dokument der Zweck des Zusatzes nicht angegeben ist.

Die DE 27 27 356 A1 beschreibt ein Bindeband, das aus einem wärmehärtbaren und einem thermoplastischen Harz gebildet ist, wobei sich die Harze von den gleichen Monomeren ableiten, sodass die beiden Harze eine chemische Affinität zueinander haben, und wobei das wärmehärtbare Harz ein mit Styrol quervernetztes ungesättigtes Polyesterharz ist. Das thermoplastische Harz kann ein Acrylnitril-Butadien-Styrol-Mischpolymerisat oder ein Acrylnitril-Styrol-Mischpolymerisat sein. Es soll damit ein Bindeband ausreichender Festigkeit, vergleichbar mit einem Stahlband, zur Verfügung gestellt werden, das eine hohe Zugfestigkeit und eine niedrige Dehnung sowie ein geringes Kriechverhalten zeigt, und das an den Enden leicht und fest miteinander verbunden werden kann. Dazu bildet das thermoplastische Harz die Aussenschicht des Bindebandes, und das wärmehärtbare Harz den Kern.

Die Aufgabe vorliegender Erfindung besteht darin, ein bandförmiges Verpackungselement zu schaffen, das auch bei niederen Temperaturen eine verringerte Spleißbildung aufweist.

Gelöst wird diese Aufgabe einerseits durch mit dem eingangs genannten Verfahren, wobei als Spleißhemmer ein thermoplastisches, nicht elastomeres, styrolbasiertes Polymer zugesetzt wird, und die Compoundierung bei einer Temperatur zwischen 250 °C und 310 °C verarbeitet wird, sodass der Spleißhemmer in dem Kunststoffband ungebunden vorliegt, sowie unabhängig hiervon durch die Verwendung eines nicht elatomeren styrolbasierten Polymers in einem Extrusionsverfahren als Spleißhemmer für ein Umreifungsband oder Erntebindegarn auf Polyesterbasis, wobei der Polyester einer PET ist.

Überraschenderweise wurde festgestellt, dass durch die Anwendung von thermoplastischen Styrol-Polymeren, also nicht elastomeren Polymeren, als Versprödungshemmer zur Reduktion der Spleißempfindlichkeit von Verpackungsbändern, insbesondere von Umreifungsbändern oder von Erntebindegarnen, nicht nur diese Eigenschaft reduziert wird, sondern damit auch deren Verwendung bei niederen Anwendungstemperaturen durch die Reduktion der Sprödbruchneigung des bandförmigen Verpackungselementes verbessert wird. Unter dem Begriff "niedere Anwendungstemperature" wird dabei eine Temperatur von unter 5 °C verstanden, wobei naturgemäß zu tiefen Temperaturen werkstoffbedingt eine Grenze gesetzt ist.

Als Spleißhemmer besonders geeignet haben sich in diesem Zusammenhang Polymere bzw. Mischpolymerisate herausgestellt, die ausgewählt sind aus einer Gruppe umfassend oder bestehend aus Polystyrol-Homopolymer, Acrylnitril-Butadien-Styrol-Copolymer (ABS), Methyl-Methacrylat-Acrylnitril-Butadien-Styrol-Copolymer (MABS), Styrol-Acrylnitril-Copolymer (SAN), Acrylnitril-Styrol-Acrylat-Copolymer (ASA), Styrol-Maleinsäureanhydrid-Copolymer (SMA), Methyl-Methacrylat-Butadien-Styrol (MBS) sowie Mischungen daraus. Der Grund für deren besondere Eignung konnte bislang nur anhand von Versuchen verifiziert werden. Eine Erklärung auf molekularer Ebene liegt noch nicht vor.

Bevorzugt ist der Anteil des styrolbasierten Polymers in dem Kunststoffband ausgewählt aus einem Bereich mit einer unteren Grenze von 0,2 Gew.-% und einer oberen Grenze von 20 Gew.-%, insbesondere 5 Gew.-%. Unterhalb von 0,2 Gew.-% ist die Spleißminderung zu gering. Oberhalb von 20 Gew.-% wird der Anteil des Basispolymers so weit reduziert, dass das Verpackungsband schlechtere Eigenschaften in Hinblick auf die Zugfestigkeit aufweist.

Gemäß einer Ausführungsvariante des Verfahrens ist vorgesehen, dass dieses vollständig polyolefinfrei ist oder weniger als 0,2 Gew.-% Polyolefin(e) enthält. Es wird damit ebenfalls eine Reduktion der Zugfestigkeit und der Härte des Kunststoffbandes vermieden.

Es kann auch vorgesehen werden, dass das Verpackungselement neben dem styrolbasierenden Spleißhemmer zumindest einen weiteren dazu unterschiedlichen Spleißhemmer im Kunststoffband enthält, der insbesondere ausgewählt ist aus einer Gruppe umfassend oder bestehend aus Olefin-Acrylat-Copolymere, thermoplastische Polymere (TPE), Low Density Polyethylen (LDPE), lineares LDPE (LLDPE), Polyethylen, Polypropylen, Butadien Kautschuk (BR), sowie Mischungen daraus. Es kann damit das Eigenschaftsprofil des Verpackungselementes besser und feiner auf den jeweiligen Anwendungsbereich abgestimmt werden.

Dabei hat es sich als vorteilhaft herausgestellt, wenn der weitere Spleißhemmer in einem Anteil enthalten ist, dass das Mengenverhältnis des styrolbasierten Spleißhemmers zum weiteren Spleißhemmer ausgewählt ist aus einem Bereich von 80 : 20 bis 20 : 80, insbesondere 60 : 40 bis 40 : 60. Es wird damit eine Reduktion der Wirkung des styrolbasierten Spleißhemmers mit hoher Sicherheit vermieden, was insbesondere in Hinblick auf das Fertigungsverfahren des bandförmigen Verpackungselementes unter wechselnden Produktionsbedingungen von Bedeutung ist.

In Hinblick auf die Reduktion des Sprödbruches liegt das styrolbasierte Polymer in dem Kunststoffband ungebunden vor, insbesondere domänenförmig, wobei bevorzugt wird, wenn die Domänen in zumindest eine Raumrichtung gestreckt ausgebildet sind, diese insbesondere in zumindest einer Raumrichtung einen zumindest annähernd elliptischen Querschnitt aufweisen. Insbesondere sind gemäß einer Ausführungsvarainte dazu die Bindungskräfte zwischen der Domäne und der umgebenden Matrix schwächer als die Bindungskräfte innherhalb der Matrix und innerhalb der Domäne. Durch die Vermeidung der chemischen Vernetzung des Basispolymers mit den Molekülen des Spleißhemmers, wodurch diese im Sinne der Erfindung ungebunden vorliegen, wird eine Veränderung in der Zugfestigkeit vermieden, wobei die domänenförmige Ausführung als Bereich wirkt, in dem sich Risse "totlaufen". Die gestreckte, insbesondere zumindest annähernd elliptische, Ausgestaltung der Domänen wirkt sich positiv in Hinblick auf die Erhaltung der anistropen Eigenschaften des Kunststoffbandes aus. Unter dem Begriff "Domäne" wird dabei ein diskreter, abgegrenzter Bereich im Kunststoffband verstanden.

Zum besseren Verständnis der Erfindung wird diese anhand der nachfolgenden Figuren näher erläutert.

Es zeigen:
- Fig. 1: eine Rasterelektronenmikroskopaufnahme eines Querschnittes durch ein Umreifungsband auf Polyesterbasis mit 2 Gew.-% Polystyrol;
- Fig. 2: eine Rasterelektronenmikroskopaufnahme eines Querschnittes durch ein Umreifungsband auf Polyesterbasis ohne erfindungsgemäßen Zusatz eines thermoplastischen Styrolpolymers ;
- Fig. 3: eine grafische Darstellung der Spleißneigung von verschiedenen Umreifungsbändem bei - 5 °C;
- Fig. 4: eine grafische Darstellung der Spleißneigung von verschiedenen Umreifungsbändem bei - 15 °C.

Einführend sei festgehalten, dass Einzelmerkmale oder Merkmalskombinationen aus den beschriebenen unterschiedlichen Ausführungsbeispielen für sich eigenständige, erfindungsgemäße Lösungen darstellen können.

Das streifenförmige Verpackungselement nach der Erfindung ist ein Kunststoffband und insbesondere ein Umreifungsband oder ein Erntebindegarn.

Das Verpackungselement wird bevorzugt polyesterbasierend hergestellt. Mit polyesterbasierend ist im Sinne der Erfindung gemeint, dass das Umreifungsband oder das Erntebindegarn bzw. das Verpackungselement aus einem Basiswerkstoff bzw. Matrixwerkstoff aus zumindest einem Polyester besteht, also der Polyester als Hauptbestanteil in einem Mengenanteil von zumindest 50 Gew.-% im Verpackungselement enthalten ist. Vorzugsweise enthält das bandförmige Verpackungselement einen Polyesteranteil von zumindest 75 Gew.-%, insbesondere zumindest 85 Gew.-% bzw. zumindest 90 Gew.-%.

Der verwendete Polyester ist Polyethylenterephthalat (PET).

Neben dem Polyesterbasismaterial kann das Verpackungselement noch weitere Additive enthalten, wie z.B. Farbmittel, wie diese aus dem Stand der Technik bekannt sind, und/oder anorganische Füllstoffe, wie z.B. Talkum oder Kreide. In der bevorzugten Ausführung der Erfindung enthält das polyesterbasierende Verpackungselement neben dem Polyester, dem thermoplastischen, styrolbasierten Polymer sowie einem Farbmittel keine weiteren Inhaltsstoffe bzw. Additive.

Bevorzugt enthält das bandförmige Verpackungselement aus dem Polyesterbasismaterial keine Polyolefine.

In den beiden Ausführungsvarianten des bandförmigen Verpackungselementes als Umreifungsband bzw. als Erntebindegarn enthält das jeweilige Basismaterial zumindest ein thermoplastisches, styrolbasiertes Polymer als Spleißhemmer. Unter einem styrolbasierten Polymer wird dabei ein Polymer verstanden, das entweder ein Homopolymer oder eine Copolymer oder ein Mischpolymerisat ist, wobei jedenfalls ein Styrolmonomer zu dessen Herstellung verwendet wurde.

Bevorzugt wird als styrolbasiertes Polymer ein Polymer verwendet, das ausgewählt ist aus einer Gruppe umfassend oder bestehend aus Polystyrol-Homopolymer, Acrylnitril-Butadien-Styrol-Copolymer (ABS), Methyl-Methacrylat-Acrylnitril-Butadien-Styrol-Copolymer (MABS), Styrol-Acrylnitril-Copolymer (SAN), Acrylnitril-Styrol-Acrylat-Copolymer (ASA), Styrol-Maleinsäureanhydrid-Copolymer (SMA), Methyl-Methacrylat-Butadien-Styrol (MBS) sowie Mischungen daraus.

Es handelt sich hierbei vorzugsweise, genauso wie bei den Polyestern und den Polyolefinen sowie den weiteren Inhaltsstoffen des Verpackungselementes, um handelsübliche Produkte.

Der Anteil des styrolbasierten Polymers in dem Kunststoffband ist ausgewählt aus einem Bereich mit einer unteren Grenze von 0,2 Gew.-%, vorzugsweise 0,5 Gew.-%, und einer oberen Grenze von 20 Gew.-%, vorzugsweise 15 Gew.-%, insbesondere 3,5 Gew.-%.

Ein Anteil von bis zu einschließlich 80 Gew.-%, insbesondere 50 Gew.-%, vorzugsweise 20 Gew.-%, dieses styrolbasierten Polymers kann allerdings auch durch einen bislang als Spleißhemmer in derartigen bandförmigen Verpackungselementen üblicherweise verwendeten weiteren Spleißhemmer ersetzt werden, der unterschiedlich zu dem styrolbasierten Spleißhemmer ist. Insbesondere ist dieser weitere Spleißhemmer ausgewählt aus einer Gruppe umfassend oder bestehend aus Olefin-Acrylat-Copolymere, thermoplastische Polymere (TPE), Low Density Polyethylen (LDPE), lineares LDPE (LLDPE), Polyethylen, Polypropylen, Butadien Kautschuk (BR), sowie Mischungen daraus. Vorzugsweise ist der weitere Spleißhemmer in einem Anteil enthalten, dass das Mengenverhältnis des styrolbasierten Spleißhemmers zum weiteren Spleißhemmer ausgewählt ist aus einem Bereich von 80 : 20 bis 20 : 80, insbesondere 60 : 40 bis 40 : 60.

Zu Versuchszwecken wurden folgende Zusammensetzungen im Extrusionsverfahren zu Bändern bzw. Garnen verarbeitet, wobei die Bänder eine Bandbreite von 9 mm bis 19 mm und die Garne eine Lauflänge von 400 m/kg aufwiesen. Da das Herstellungsverfahren derartiger bandförmiger Verpackungselemente an sich aus dem Stand der Technik bekannt ist, sei der Fachmann dazu an die einschlägige Literatur verwiesen.

In den Tabellen bedeuten:

| Versuch | Dimension [mm] | SP-Additiv | Anteil SP [%] | Std-Additiv [%] |
|---|---|---|---|---|
| Band | 9x0,55 | PS | 2,5 | 0 |
| Band | 15x0,55 | PS | 0,5 | 0 |
| Band | 15x1 | PS | 0,01 | 0 |
| Band | 15x1 | PS | 0,02 | 0 |
| Band | 15x1 | PS | 0,04 | 0 |
| Band | 15x1 | PS | 1 | 0 |
| Band | 15x1 | PS | 2 | 0 |
| Band | 16x0,9 | PS | 2 | 0 |
| Band | 16x1,0 | PS | 2 | 0 |
| Band | 16x1,0 | ABS | 0,5 | 0 |
| Band | 16x1,0 | ABS | 1 | 0 |
| Band | 16x1,0 | ABS | 1,5 | 0 |
| Band | 16x1,0 | ABS | 2 | 0 |
| Band | 16x1,0 | ABS | 2,5 | 0 |
| Band | 16x1,0 | SAN | 0,5 | 0 |
| Band | 16x1,0 | SAN | 1 | 0 |
| Band | 16x1,0 | SAN | 1,5 | 0 |
| Band | 16x1,0 | SAN | 2 | 0 |
| Band | 16x1,0 | SAN | 2,5 | 0 |
| Band | 19x1,0 | PS | 0,5 | 0 |
| Band | 19x1,0 | PS | 2 | 0 |
| Band | 19x1,27 | PS | 1 | 0 |
| Band | 19x1,27 | PS | 2 | 0 |
| Band | 19x1,27 | PS | 3,5 | 0 |
| Band | 19x1,27 | PS | 1 | 1 |
| Band | 19x1,27 | PS | 1,5 | 0,5 |
| Band | 19x1,27 | PS | 2,25 | 0,75 |

| | | | | |
|---|---|---|---|---|
| SP ... Styrolpolymer, Std.-Additiv ... ein übliches dem Stand der Technik entsprechendes Additiv, wie einleitend ausgeführt, [%] .... Gew.-%. | | | | |

| Versuch | Laufmeter [m/kg] | SP-Additiv | Anteil SP [%] |
|---|---|---|---|
| Garn | 400 | PS | 1 |
| Garn | 400 | PS | 2 |
| Garn | 400 | PS | 5 |

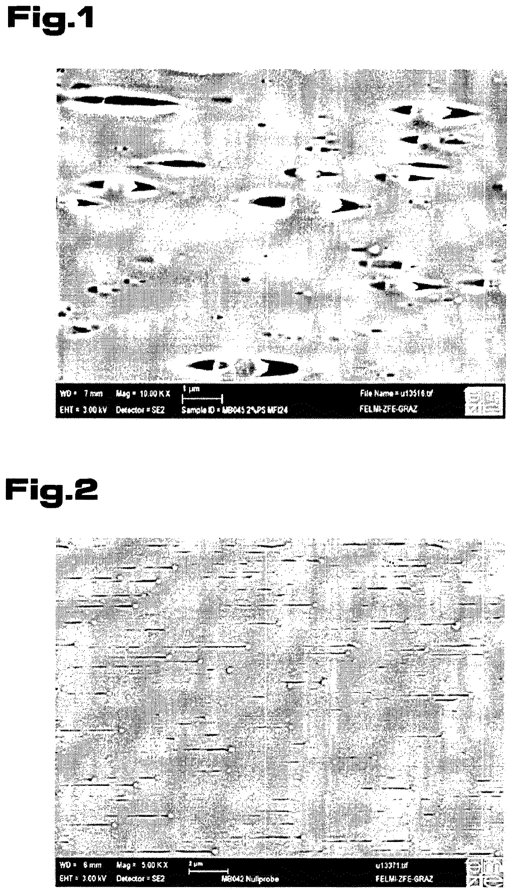

Zumindest ein Anteil von 90 %, insbesondere 95 %, vorzugsweise 99 %, vom Gesamtanteil des styrolbasierten Spleißhemmers, bevorzugt zumindest annähernd 100 %, liegt in dem Kunststoffband ungebunden und gemäß einer Ausführungsvariante domänenförmig vor, wie dies aus Fig. 1 ersichtlich ist, das ein Umreifungsband mit der Zusammensetzung 98 Gew.-% PET und 2 Gew.-% PS zeigt. Erreicht wird dies, indem die Compoundierung zur Herstellung des Verpackungselementes bei einer Temperatur zwischen 250 °C und 310 °C, insbesondere zwischen 270 °C und 300 °C, verarbeitet wird.

Zum Unterschied dazu zeigt Fig. 2 eine Rasterelektronenmikroskopaufnahme eines PET-Bandes ohne den Zusatz eines thermoplastischen, styrolbasierten Spleißhemmers. Es soll damit der Unterschied zum erfindungsgemäßen Verpackungselement verdeutlicht werden. Zu sehen ist, dass in diesem Fall zwar auch Domänen ausgebildet sind (weiße Punkte), die allerdings auf teilkristalline Bereiche des PET zurückgehen.

Insbesondere bevorzugt ist eine Ausführung, bei der die Domänen in eine Richtung gestreckt ausgebildet sind, wie dies aus Fig. 1 ersichtlich ist. Es wurde dazu die Streckung in zumindest eine Raumrichtung der Domänen erreicht durch Verstrecken mittels Reckwerken und Reckofen. Vorzugsweise erfolgt dabei die Streckung der Domänen in eine Raumrichtung zu einem zumindest annähernd elliptischen Querschnitt.

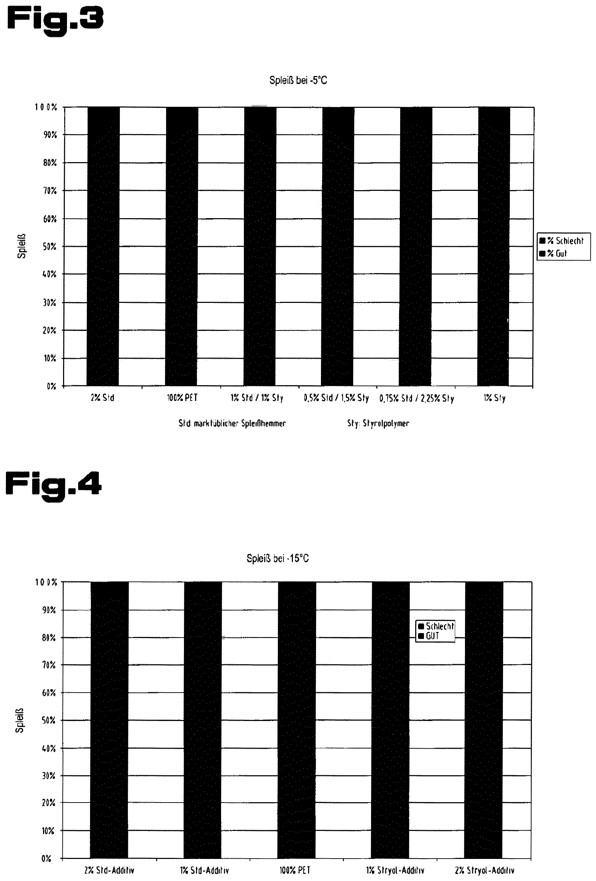

Für die Darstellungen in den Fig. 3 und 4 wurde an verschiedenen Umreifungsbändern auf Polyesterbasis mit unterschiedlichen Anteilen Polystyrol bzw. ohne derartige Spleißhemmer bzw. mit marktüblichen Standardadditiven (die Angaben unterhalb der Balken auf der Abszisse sind wieder als Gew.-% zu verstehen, wobei die Abkürzungen "Std" für ein marktübliches Standardadditiv und "Sty" für Polystyrol stehen) durch mechanische Druckbelastung quer zur Verstreckungsrichtung Spleiß bei einer Temperatur von -5 °C (Fig. 3) bzw. - 15 °C (Fig. 4) provoziert. Dies wurde an jedem Band mehrfach durchgeführt (40-60mal). Der Anteil jener Belastungsfälle, bei denen tatsächlich Spleiß aufgetreten ist, wurde als "schlecht" bewertet.

In Fig. 3 wurden dabei dem PET neben sortenreinen Additiven auch Kombinationen aus marktüblichen Spleißhemmern und PS zugesetzt, in Fig. 4 ausschließlich sortenreine Additive.

Wie aus Fig.3 ersichtlich ist, bewirkt ein Zusatz von 1 Gew.-% PS eine deutlich bessere spleißhemmende Wirkung als 2 Gew.-% Zusatz des Stand der Technik Spleißhemmers. In den Bändern mit Kombinationen aus Stand der Technik Additiv und PS steigt die Beständigkeit gegen Spleiß bei diesen Umgebungsbedingungen mit zunehmendem PS-Anteil.

Fig. 4 zeigt, dass bei der für diese Anwendung sehr tiefen Temperatur von -15°C mit 2 Gew.-% PS die Spleißneigung deutlich reduziert werden kann. Das Stand der Technik Additiv zeigt hingegen bei diesen Bedingungen keinerlei Wirkung mehr.

## Patentansprüche

1. Verfahren zur Spleißhemmung eines bandförmigen Verpackungselementes, insbesondere eines Umreifungsbandes oder eines Erntebindegarns, aus einem Kunststoffband auf Polyesterbasis, wobei als Polyester ein PET eingesetzt wird, wobei das PET mit zumindest einem styrolbasierten Polymer als Spleißhemmer im Extrusionsverfahren compoundiert wird, **dadurch gekennzeichnet, dass** als Spleißhemmer ein thermoplastisches, nicht elastomeres, styrolbasiertes Polymer zugesetzt wird, und die Compoundierung bei einer Temperatur zwischen 250 °C und 310 °C verarbeitet wird, sodass der Spleißhemmer in dem Kunststoffband ungebunden vorliegt.

2. Verfahren nach Anspruch 1, **dadurch gekennzeichnet, dass** der Spleißhemmer ausgewählt wird aus einer Gruppe umfassend oder bestehend aus Polystyrol-Homopolymer, Acrylnitril-Butadien-Styrol-Copolymer (ABS), Methyl-Methacrylat-Acrylnitril-Butadien-Styrol-Copolymer (MABS), Styrol-Acrylnitril-Copolymer (SAN), Acrylnitril-Styrol-Acrylat-Copolymer (ASA), Styrol-Maleinsäureanhydrid-Copolymer (SMA), Methyl-Methacrylat-Butadien-Styrol (MBS) sowie Mischungen daraus.

3. Verfahren nach Anspruch 1 oder 2, **dadurch gekennzeichnet, dass** der Anteil des styrolbasierten Polymers in dem Kunststoffband ausgewählt wird aus einem Bereich mit einer unteren Grenze von 0,2 Gew.-% und einer oberen Grenze von 20 Gew.-%, insbesondere 5 Gew.-%.

4. Verfahren nach einem der Ansprüche 1 bis 3, **dadurch gekennzeichnet, dass** das Kunststoffband auf Polyesterbasis vollständig polyolefinfrei oder mit weniger als 0,2 Gew.-% Polyolefin(en) hergestellt wird.

5. Verfahren nach einem der Ansprüche 1 bis 4, **dadurch gekennzeichnet, dass** das Kunststoffband mit einem Anteil an dem Polyester von mindestens 50 Gew.-% hergestellt wird.

6. Verfahren nach einem der Ansprüche 1 bis 5, **dadurch gekennzeichnet, dass** neben dem styrolbasierenden Spleißhemmer zumindest ein weiterer dazu unterschiedlicher Spleißhemmer zugesetzt wird.

7. Verfahren nach Anspruch 6, **dadurch gekennzeichnet, dass** der weitere Spleißhemmer ausgewählt wird aus einer Gruppe umfassend oder bestehend aus Olefin-Acrylat-Copolymere, thermoplastische Polymere (TPE), Low Density Polyethylen (LDPE), lineares LDPE (LLDPE), Polyethylen, Polypropylen, Butadien Kautschuk (BR), sowie Mischungen daraus.

8. Verfahren nach Anspruch 6 oder 7, **dadurch gekennzeichnet, dass** der weitere Spleißhemmer in einem Anteil enthalten zugesetzt wird, dass das Mengenverhältnis des styrolbasierten Spleißhemmers zum weiteren Spleißhemmer ausgewählt ist aus einem Bereich von 80 : 20 bis 20 : 80.

9. Verfahren nach einem der Ansprüche 1 bis 8, **dadurch gekennzeichnet, dass** das styrolbasierte Polymer domänenförmig ausgebildet wird.

10. Verfahren nach Anspruch 9, **dadurch gekennzeichnet, dass** die Bindungskräfte zwischen der Domäne und der umgebenden Matrix schwächer sind als die Bindungskräfte innherhalb der Matrix und innerhalb der Domäne.

11. Verfahren nach Anspruch 9 oder 10, **dadurch gekennzeichnet, dass** die Domänen in zumindest eine Raumrichtung gestreckt ausgebildet werden.

12. Verfahren nach Anspruch 9 bis 11, **dadurch gekennzeichnet, dass** die Domänen mit in zumindest einer Raumrichtung mit zumindest annähernd elliptischem Querschnitt hergestellt werden.

13. Verwendung eines nicht elastomeren, styrolbasierten Polymers in einem Extrusionsverfahren als Spleißhemmer für ein Umreifungsband oder ein Erntebindegarn auf Polyesterbasis, wobei der Polyester einer PET ist.

14. Verwendung nach Anspruch 13, **dadurch gekennzeichnet, dass** das styrolbasierte Polymer ausgewählt ist aus einer Gruppe umfassend oder bestehend aus Polystyrol-Homopolymer, Acrylnitril-Butadien-Styrol-Copolymer (ABS), Methyl-Methacrylat-Acrylnitril-Butadien-Styrol-Copolymer (MABS), Styrol-Acrylnitril-Copolymer (SAN), Acrylnitril-Styrol-Acrylat-Copolymer (ASA), Styrol-Maleinsäureanhydrid-Copolymer (SMA), Methyl-Methacrylat-Butadien-Styrol (MBS) sowie Mischungen daraus.

## Claims

1. Splicing inhibition method for a tape-like packaging element, particularly a strap or baling twine, made from a polyester-based plastic tape, wherein a PET is used as the polyester, wherein the PET is compounded in an extrusion process with at least one styrene-based polymer as a splicing inhibitor, **characterized in that** a thermoplastic, non-elastomeric, styrene-based polymer is added as a splicing inhibitor and the compounding is conducted at a temperature between 250°C and 310°C, so that the splicing inhibitor is present in the plastic strip in the unbonded state.

2. Method according to claim 1, **characterized in that** the splicing inhibitor is selected from the group consisting of polystyrene-homopolymer, acrylonitrile-butadiene-styrene copolymer (ABS), methyl-methacrylate-acrylonitrile-butadiene-styrene copolymer (MABS), styrene-acrylonitrile copolymer (SAN), acrylonitrile-styrene-acrylate copolymer (ASA), styrene-maleic acid anhydride copolymer (SMA), methyl-methacrylate-butadiene-styrene (MBS), and mixtures thereof.

3. Method according to claim 1 or 2, **characterized in that** the proportion of styrene-based polymer in the plastic tape is selected from a range with a lower limit of 0.2% by wt. and an upper limit of 20% by wt., particularly 5% by wt.

4. Method according to any one of claims 1 to 3, **characterized in that** the polyester-based plastic tape is manufactured entirely without polyolefins or with less than 0.2% by wt. polyolefins.

5. Method according to any one of claims 1 to 4, **characterized in that** the proportion of the polyester in the plastic tape is at least 50% by wt.

6. Method according to any one of claims 1 to 5, **characterized in that** a further, different splicing inhibitor is added besides the styrene-based splicing inhibitor.

7. Method according to claim 6, **characterized in that** the additional splicing inhibitor is selected from a group comprising or consisting of olefin-acrylate copolymers, thermoplastic polymers (TPE), low density polyethylene (LDPE), linear LDPE (LLDPE), polyethylene, polypropylene, butadiene rubber (BR) and mixtures thereof.

8. Method according to claim 6 or 7, **characterized in that** the additional splicing inhibitor is added in such a quantity that the proportion of styrene-based splicing inhibitor to the additional splicing inhibitor is selected from a range of from 80:20 to 20:80.

9. Method according to any of claims 1 to 8, **characterized in that** the styrene-based polymer is formed domain-like.

10. Method according to claim 9, **characterized in that** the binding forces between the domain and the surrounding matrix are weaker than the binding forces within the matrix and within the domain.

11. Method according to claim 9 or 10, **characterized in that** the domains are designed to be stretched in at least one spatial direction.

12. Method according to claims 9 to 11, **characterized in that** the domains are produced with at least an approximately elliptical cross section in at least one spatial direction.

13. Use of a non-elastomeric, styrene-based polymer in an extrusion process as a splicing inhibitor for a polyester-based strap or a baling twine, wherein the polyester is a PET.

14. Use according to claim 13, **characterized in that** the styrene-based polymer is selected from a group comprising or consisting of polystyrene-homopolymer, acrylonitrile-butadiene-styrene copolymer (ABS), methyl-methacrylate-acrylonitrile-butadiene-styrene copolymer (MABS), styrene-acrylonitrile copolymer (SAN), acrylonitrile-styrene-acrylate copolymer (ASA), styrene-maleic acid anhydride copolymer (SMA), methyl-methacrylate-butadiene-styrene (MBS), and mixtures thereof.

## Revendications

1. Procédé pour l'inhibition d'épissure d'un élément d'emballage en forme de bande, notamment d'une bande d'entourage ou d'un fil d'emballage de récolte, sous la forme d'une bande en matière synthétique à base de polyester, en tant que polyester, du téréphtalate de polyéthylène (PET) est utilisé, le PET étant mélangé avec au moins un polyester à base de styrène comme inhibiteur d'épissure dans un procédé d'extrusion, **caractérisé en ce qu'**il est ajouté, en tant qu'inhibiteur d'épissure, un polymère thermoplastique à base de styrène non élastomère et que le mélange est traité à une température entre 250 °C et 310 °C, de manière que l'inhibiteur d'épissure est présent de façon libre dans la bande en matière synthétique.

2. Procédé selon la revendication 1, **caractérisé en ce que** l'inhibiteur d'épissure est choisi dans un groupe comprenant ou formé par homopolymère de polystyrène, copolymère d'acrylonitrile-butadiène-styrène (ABS), copolymère de méthyl-méthacrylate-acrylonitrile-butadiène-styrène (MABS), copolymère de styrène-acrylonitrile (SAN), copolymère d'acrylonitrile-styrène-acrylate (ASA), copolymère de styrène-anhydride maléique (SMA), méthyl-méthacrylate-butadiène-styrène (MBS), et des mélanges de ceux-ci.

3. Procédé selon la revendication 1 ou 2, **caractérisé en ce que** la part de polymère à base de styrène dans la bande en matière synthétique est choisie dans une plage avec une limite inférieure de 0,2 % en poids et avec une limite supérieure de 20 % en poids, notamment de 5 % en poids.

4. Procédé selon l'une quelconque des revendications 1 à 3, **caractérisé en ce que** la bande en matière synthétique à base de polyester est entièrement exempt de polyoléfine ou est fabriquée avec moins de 0,2 % en poids de polyoléfine(s).

5. Procédé selon l'une quelconque des revendications 1 à 4, **caractérisé en ce que** la bande en matière synthétique est fabriquée avec une part de polyester d'au moins 50 % en poids.

6. Procédé selon l'une quelconque des revendications 1 à 5, **caractérisé en ce que**, outre l'inhibiteur d'épissure à base de styrène, au moins un autre inhibiteur d'épissure, différent du premier, est ajouté.

7. Procédé selon la revendication 6, **caractérisé en ce que** l'inhibiteur d'épissure supplémentaire est choisi dans un groupe comprenant ou formé par copolymère d'oléfine-acrylate, polymères thermoplastiques (TPE), polyéthylène de densité faible (LDPE), LDPE linéaire (LLDPE), polyéthylène, polypropylène, caoutchouc de butadiène (BR) et des mélanges de ceux-ci.

8. Procédé selon la revendication 6 ou 7, **caractérisé en ce que** l'inhibiteur d'épissure supplémentaire est ajouté dans une part telle que le rapport en quantité entre l'inhibiteur d'épissure à base de styrène et l'inhibiteur d'épissure supplémentaire est choisi dans une plage allant de 80 : 20 à 20 : 80.

9. Procédé selon l'une quelconque des revendications 1 à 8, **caractérisé en ce que** le polymère à base de styrène est formé en domaines.

10. Procédé selon la revendication 9, **caractérisé en ce que** les forces de lien entre le domaine et la matrice environnante sont plus faibles que les forces de lien à l'intérieur de la matrice et à l'intérieur du domaine.

11. Procédé selon la revendication 9 ou 10, **caractérisé en ce que** les domaines sont formés allongés dans au moins une direction de l'espace.

12. Procédé selon l'une quelconque des revendications 9 à 11, **caractérisé en ce que** les domaines avec au moins une direction de l'espace sont formés avec une section transversale au moins approximativement elliptique.

13. Utilisation d'un polymère à base de styrène non-élastomère dans un procédé d'extrusion comme inhibiteur d'épissure pour une bande d'entourage ou un fil d'emballage de récolte, à base de polyester, le polyester étant du PET.

14. Utilisation selon la revendication 13, **caractérisé en ce que** le polymère à base de styrène est choisi dans un groupe comprenant ou formé par homopolymère de polystyrène, copolymère d'acrylonitrile-butadiène-styrène (ABS), copolymère de méthyl-méthacrylate-acrylonitrile-butadiène-styrène (MABS), copolymère de styrène-acrylonitrile (SAN), copolymère d'acrylonitrile-styrène-acrylate (ASA), copolymère de styrène-anhydride maléique (SMA), méthyl-méthacrylate-butadiène-styrène (MBS), et des mélanges de ceux-ci.
